# EUROPEAN PATENT SPECIFICATION

(11) **EP 2 514 954 B1**
(45) Date of publication and mention of the grant of the patent: **25.03.2015**
(21) Application number: 12175040.0
(22) Date of filing: 01.08.2008
(51) Int. Cl.: F02D 41/00, F02D 41/22, F02M 25/07, G01N 33/00

(54) **Diagnostic method for an internal combustion engine through analysis of its exhaust gases and a device for implementing same**
Diagnoseverfahren für einen Verbrennungsmotor mittels Analyse der Abgase und Vorrichtung zu dessen Implementierung
Procédé de diagnostic d'un moteur à combustion interne par analyse des gaz d'échappement et dispositif de mise en oeuvre

(30) Priority: 03.08.2007 FR 0756945
(43) Date of publication of application: 24.10.2012
(62) Divisional of application: 08786792.5
(73) Proprietor: Ecosphere S.A., 8360 Goetzingen (LU)
(72) Inventor: Castella, Jean-Pierre, 83890 Besse sur Issole (FR); Deregnaucourt, David, 59185 Auberchicourt (FR)
(74) Representative: Pronovem

(56) References cited:
- EP-A2- 1 088 980
- GB-A- 1 551 920
- JP-A- 10 159 634
- US-A1- 2003 225 503

## Description

The present invention relates to a diagnostic method for an internal combustion engine through analysis of its exhaust gases and a device for implementing said method.

It relates more particularly to the analysis of the combustion of Diesel engines, in particular in order to diagnose the efficiency of the pollution control system connected to this type of engine.

Indeed, the fight against pollution, regardless of its origin, is at the center of international discussions today. All land vehicles, including the automobile, are partially responsible. Governments and manufacturers have therefore been working for years to limit the polluting emissions of these vehicles. The measures taken have gone in the direction of a tightening of anti-pollution standards in the years to come.

While vehicles equipped with spark ignition engines (gasoline, GPL (liquefied petroleum gas), GNV (natural gas for vehicles) and E85 engines) are relatively easy to clean using catalysts, Diesel engines are much less so. The particles emitted by this type of engine do not pose any particular problems, insofar as very effective filters are available on the market and equip a growing number of Diesel vehicles.

The reduction of nitrogen oxides (NOₓ), however, is much more delicate, due to the fact that the pollution control systems used, generally EGR (Exhaust Gas Recirculation) valves, work depending on many related variables which may drift. This drift, often difficult to diagnose, creates problematic malfunctions impacting the proper pollution control of the engine, in particular.

More precisely, as one knows, a Diesel engine works in surplus air mode, therefore in the presence of a large amount of oxygen, which chemically causes strong emissions of nitrogen oxides (NOx). Through the EGR valve, exhaust gases are reinjected into the intake, thereby delaying the flash point, and thereby reducing the formation of NOₓ. The EGR valve is driven by a computer from idle to approximately 3000 rpm, depending on various parameters.

The combustion of a Diesel engine, as perfect as it may be, creates soot in addition to particles. This soot causes a sooting up of the EGR valve and the intake manifold at variable mileages. Any geometric modification of the intake manifold (narrowing of the conduits due to sooting) will cause a malfunction for lack of air filling. The performance and power of the engine will be greatly affected.

The exhaust line and the pollution control system will also clog, intensifying the engine malfunctions. When the pollution control system becomes inoperative, the computer controls the EGR valve in the closed position, but also reduces the engine performance by limiting the supercharging pressure.

Although a number of methods exist which make it possible to determine whether an engine's exhaust gases exceed the prescribed admissible atmospheric pollution values, such as, for example, that described in patent application BE 84 46 22 which proposes, in particular, analyzing the engine's exhaust gases in order to determine whether, for different prescribed control modes, their levels exceed the stipulated admissible atmospheric pollution values in carbon monoxide (CO) and hydrocarbon (HC).

Furthermore, devices and methods for engine control, e.g. for determining the amount of exhaust gases to be reintroduced to the engine's combustion air, are known. For example, US 2002/157458 describe a method to measure carbon dioxide in the recirculated air of an engine's precombustion. US6457461 disclose a system and a method for diagnosing a component failure in an internal combustion engine to divert exhaust gas from the engine exhaust to the engine intake. Whereas, US 2003/191575 describe a system and a method for estimating NOx content of exhaust gas produced by an internal combustion engine to determine the correct proportions of air, fuel and exhaust gas to control the engine, EGR system and/or turbocharger.

On the other hand, DE 10 2005013936 discloses measurements of carbon dioxide levels to monitor the normal or sufficient regeneration of a Diesel engine particle filter in an exhaust line.

Currently, in Diesel engine maintenance or repair, to diagnose malfunctions on the engine, it is well known to measure smoke emission. However, the smoke-opacity test do not allow to diagnose precisely which part of the engine, or device associated, is defective.

There is currently no method allowing precisely and simply to diagnose malfunctions negatively impacting the degree of pollution of the exhaust gases from a Diesel engine.

The present invention discloses a method and a device to diagnose malfunctions on the engine in Diesel engine maintenance or repair.

Furthermore, it discloses a method to determine whether the Diesel engine, or at least one device associated with it, is affected by a malfunction of a nature, for instance, to alter the engine's performance, cause a breakdown of the engine or to determine whether the device is defective.

It proposes, in general, a diagnostic method for a Diesel engine to determine whether the engine, or at least one device associated therewith, is affected by one or several malfunctions negatively influencing the degree of pollution of the exhaust gases produced by this engine. The pollution control system will be likewise affected.

The diagnostic method according the present invention comprises the steps of analysing the level of a first exhaust gas, or the evolution of the first exhaust gas level, according to a predetermined state of said engine, and deducing or characterizing, from said analysis, any malfunction affecting the engine and/or the device connected thereto.

The predetermined state of the engine has to be understood as being any suitable engine speed.

The inventors indeed noticed that from the analysis of an exhaust gas of Diesel engines allow to precisely characterize the principal malfunctions affecting the pollution control system of a the engine, and more generally, a good number of malfunctions affecting the Diesel engine, or at least one device associated therewith, and in particular having a direct impact on the pollution level of this engine.

According to particular embodiments, the method may comprise one or a combination of any of the following characteristics:
- the level or evolution of the first exhaust gas is analyzed in combination with the level, or evolution of the level, of at least another exhaust gas,
- the first exhaust gas and the at least another exhaust gas are selected from the group consisting in carbon dioxide (CO₂), carbon monoxide (CO), oxygen (O₂), nitrogen oxides (NOₓ), and unburnt hydrocarbons (HC),
- the level and the evolution of the level of the gases selected from the group consisting in carbon dioxide (CO₂), carbon monoxide (CO), oxygen (O₂), nitrogen oxides (NOₓ) and unburnt hydrocarbons (HC), are analysed depending on several predetermined states, and, from said analysis, the malfunctions, which may be affecting the engine and/or the device connected thereto, are deduced or characterized,
- according to a predetermined operating state of the engine, the level of the first exhaust gas, alone or in combination with at least another exhaust gas, is measured and compared to a first level of said exhaust gas measured for a state representing a normal operation of said engine or the device connected thereto, and/or compared to a second level of said exhaust gas measured for a state representing a abnormal operation of said engine, or the device connected thereto, and characterizing a predetermined malfunction, and from said comparison, deducing that said engine, or said device connected thereto, is affected by said predetermined malfunction,
- the predetermined state of the engine is idle, off after being idle, start-up, idle after being started-up, 1200 rpm, between around 3000 and around 3500 rpm, full load, idle after being full-loaded

According to other preferred embodiments, preferably taken in combination:
- the method comprises the steps of:
   - analyzing the evolution of the level of carbon dioxide according to an operating state of the engine causing the opening of an exhaust gas recirculation (EGR) valve connected to said engine, using a computer controlling the opening and closing of said valve, and
   - deducing, from a lack of increase of the level of carbon dioxide after theoretical opening of the exhaust gas recirculation valve, that said valve is not controlled by the computer or blocked in the closed position,
   or the steps of:
   - analyzing the evolution of the carbon dioxide level according to an operating state of said engine causing the closing of an exhaust gas recirculation valve connected to said engine using a computer controlling the opening and closing of this valve, and
   - deducing, from a lack of decrease, for an engine speed between 3000 and 3500 rpm, of the carbon dioxide level after theoretical closing of the exhaust gas recycling valve, that said valve is blocked in the open position,
   or the steps of:
   - analyzing the evolution of the carbon dioxide level, for an engine operation at a speed below 2700 rpm and at a speed between 3000 and 3500 rpm, and
   - deducing from a carbon dioxide level for said 3000 and 3500 rpm speed equal to, or higher than, the value measured for a speed less than 2700 rpm, that said valve lacks sealing,
- the method comprises the steps of:
   - analyzing the carbon dioxide level and oxygen level, engine off after an idle operation, and
   - deducing that the exhaust line connected to said engine is clogged, if, at the end of approximately 40 seconds, the carbon dioxide level has not dropped to a value below approximately 1% and the oxygen level is not higher than or equal to approximately 20%,
- the method comprises the steps of:
   - analyzing the carbon dioxide level and the oxygen level for a fully loaded engine operation, and
   - deducing, from a total carbon dioxide and oxygen level less than approximately 19%, that the engine has insufficient air filling,
- the method comprises the steps of:
   - analyzing the carbon dioxide level for a fully loaded engine operation, and
   - deducing, from a decrease in the carbon dioxide level during the fully loaded operation, that a common rail injector system connected to said engine is affected by an internal leak, or
   - deducing, from a carbon dioxide level dropping by approximately 1% to approximately 5% between the beginning and the end of a fully loaded phase lasting approximately 15 seconds, that a common rail injector system connected to the said engine is affected by an internal leak,
   or the steps of:
   - analyzing, the evolution of the carbon monoxide level for an idle operation of the engine and at a speed higher than, or equal to, 1200 rpm, and
   - deducing, from an increase in the carbon monoxide level relative to the idle phase, that a common rail injector system connected to said engine has an internal leak,
- the method comprises the steps of:
   - analyzing the carbon dioxide level for a fully loaded operation of the engine, and
   - deducing, from an increase of the carbon dioxide level during fully loaded operation, that the flow regulator connected to a high pressure pump of a common rail injection system equipping said engine is defective,
   or the steps of:
   - analyzing either the evolution of the level of carbon dioxide, from ignition of the engine until a stabilized idle speed of said engine without exhaust gas recirculation, or the level of carbon dioxide for a fully loaded operation of said engine, and
   - deducing, from an increase in the carbon dioxide level not exceeding approximately 4 seconds and not exceeding approximately 1.5%, that the high pressure pump of the fuel injection system equipping said engine is defective, or from an increase in the carbon dioxide level exceeding 2.5% that the distributor-type pump of said fuel injection system is defective,
- the method comprises the steps of:
   - analyzing the carbon dioxide level and the oxygen level for a fully loaded engine operation, and
   - deducing, from a total level of carbon dioxide and oxygen less than approximately 19%, with a carbon dioxide level higher than approximately 8%, and an oxygen level lower than approximately 10%, that the turbocharger equipping said engine is defective,
   or the steps of:
   - analyzing the evolution of the concentration of unburnt hydrocarbons for a speed increase or a return to idle thereof, and
   - deducing, from an increase in the level of hydrocarbons for the increase in speed, and a concentration higher than approximately 40 ppm after returning to idle, that the turbocharger equipping said engine has an oil leak on at least one of its bearings,
- the method comprises the steps of:
   - analyzing the carbon monoxide level and the unburnt hydrocarbons level, and
   - deducing, from a carbon monoxide level higher than approximately 0.05% and a hydrocarbon level higher than approximately 10 ppm, that a poor spraying of the injectors is affecting said engine,
   or the steps of :
   - analyzing the level of nitrogen oxides, either for an idle operation of the engine with exhaust gas recirculation, or for a fully loaded operation, and
   - deducing, for a direct injection Diesel engine, from a level of nitrogen oxides higher than approximately 120 ppm at idle operation, or higher than approximately 250 ppm at fully loaded operation, that a poor spraying of the injectors is affecting said engine
- the method comprises the steps of:
   - analyzing, the level of carbon monoxide and the level of nitrogen oxides for an idle operation of the engine, or at a speed of approximately 3000 rpm, and
   - deducing:
      a) from a carbon monoxide level lower than 0.005% and a nitrogen oxide level higher than approximately 140 ppm for a direct injection engine operating at idle with exhaust gas recirculation, that said engine has an injection advance excess; or
      b) from a carbon monoxide level lower than approximately 0.005% and a nitrogen oxide level higher than approximately 90 ppm for an indirect injection engine operating at idle, with exhaust gas recirculation, that said engine has an injection advance excess; or
      c) from a carbon monoxide level higher than 0.02% and a nitrogen oxide level lower than 90 ppm for a direct injection engine operating idle, that said engine lacks injection advance; or
      d) from a carbon monoxide level higher than 0.02% and a nitrogen oxide level higher than 100 ppm for a direct injection engine operating at a speed of approximately 3000 rpm, that said engine lacks injection advance; or
      e) from a carbon monoxide level higher than 0.02% and a nitrogen oxygen level lower than 60 ppm for a direct injection engine operating at idle, that said engine lacks injection advance; or
      f) from a carbon monoxide level higher than 0.02% and a nitrogen oxide level higher than 60 ppm for a direct injection engine operating at approximately 3000 rpm, that said engine lacks injection advance,
- the method comprises the steps of:
   - analyzing the evolution of the carbon monoxide level and the nitrogen oxygen levels over a speed increase of the engine, from idle to approximately 1200 rpm, and
   - deducing, from a decrease in the level of nitrogen oxides without variation of the carbon monoxide level, that the intake circuit equipping said engine has an air scoop,
- the method comprises the steps of:
   - analyzing the level of unburnt hydrocarbons (HC) for an engine operating at idle, and
   - deducing from a level higher than 100 ppm that the engine's injection circuit is affected by a seizing of the injectors,

The present invention also relates to a device for diagnosing a Diesel engine to determine whether said engine, or at least one device connected thereto, is affected by at least one malfunction negatively influencing the degree of pollution of the exhaust gases produced by said engine, comprising means for measuring at least a first exhaust gas selected from the group consisting in carbon dioxide (CO₂), carbon monoxide (CO), oxygen (O₂), nitrogen oxides (NOₓ), and unburnt hydrocarbons (HC) or a combination thereof, means for analyzing the level of said gas, or the evolution of said level, according to one or several predetermined states of said engine, and processing means capable to characterize, from said analysis, any malfunction(s) affecting said engine and/or the devices connected thereto

According to particular embodiments, the diagnostic device may comprise one or a combination of any of the following characteristics:
- the analysis means comprise at least one gas detector in the form of a measuring cell,
- the predetermined state of the engine is idle, off after being idle, start-up, idle after being started-up, 1200 rpm, between around 3000 and around 3500 rpm, full load, idle after being full-loaded.

The present invention relates also to a computer program executable on the device, according to the present invention, containing instructions that, when executed, perform the method steps of the method according to the present invention.

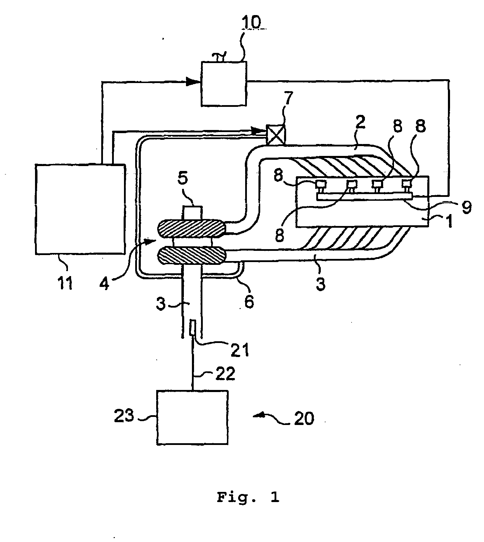

The Diesel engine, for which a diagnostic is established using the diagnostic device according to the present invention, is illustrated in figure 1. It is, in a known manner, a Diesel internal combustion engine 1, for example for a car, a truck, a tractor, or a boat. In figure 1, the engine uses direct injection, which comprises, on the intake side, a supercharging air supply circuit 2 and, on the exhaust side, an exhaust gas conduit 3. In another embodiment, the Diesel engine may be of the indirect injection type.

The exhaust gases in the exhaust gas conduit 3 drive a turbocharger 4 provided with an atmospheric air inlet 5.

These exhaust gases can be processed through a catalyst and a particle filter, not shown in the figure, then discharged into the environment.

Also provided is an exhaust gas recirculation device comprising a bleed line for bleeding of exhaust gases on the exhaust gas conduit 3 and an EGR valve 7 controlling the admission of these exhaust gases bled through the line 6 in the intake circuit, i.e. here the supercharging air supply circuit 2.

The Diesel engine is also supplied with fuel (diesel oil) through injectors 8, themselves supplied, by a common rail 9 connected to a high-pressure injection pump 10.

In another embodiment, the Diesel internal combustion engine may not comprise a turbocharger. Moreover, the common rail 9 and the high-pressure injection pump 10 may be replaced by a distributor-type fuel injection pump.

An electronic control center 11 is also provided to control, in particular, the EGR valve 7 and the high-pressure injection pump 10.

The diagnostic device 20, according to the present invention, comprises a multi-gas analyzer 21 protected by a filtration system. In practice, this is a five-gas analyzer equipped with several gas detectors present in the form of an optical bench detecting hydrocarbons (HC), carbon monoxide (CO) carbon dioxide (CO₂), and oxygen and nitrogen oxide detection cells, for example of the type marketed by the company City Technology, able to measure gas levels.

More precisely, the gases detected by these cells and this bench are carbon dioxide (CO₂), carbon monoxide (CO), oxygen (O₂), nitrogen oxide (NOx) and unburnt hydrocarbons (such as hexane and propane, for example).

The collection tube 22 of the analyzer is introduced into the exhaust line; however, in another embodiment the analysis may be done at the outlet of the line. It is also possible to implement a system comprising detectors coupled to means for analyzing signals emitted by gas detectors, in order to calculate the respective gas levels.

The multi-gas detector 21 is functionally connected by the measurement tube 22 to means 23 for interpreting the various measured values. The means 23 comprise signal processing electronics allowing in particular a phasing of the values, and a traditional microcomputer, comprising a central processing unit, random access memory (RAM) and read only memory (ROM), and input/output units interconnected by buses as well as a power supply.

Means for displaying the results of the diagnostic are also provided with the device 20 here.

The microcomputer is a diagnostic apparatus specially dedicated to the implementation of the diagnostic method according to the present invention. In another embodiment, it may be a microcomputer of a diagnostic apparatus for a more general internal combustion engine or the microcomputer of a personal computer (PC).

Printing means may be connected to the apparatus, to print the report, or reports, related to the diagnostic, preferably maintenance sheets indicating the checks and repairs to be performed.

The algorithms (modeled defaults) used for the implementation of the diagnostic method according to the present invention are thus present in the form of at least one program transferred into the microcomputer to interpret the various measured values.

The diagnostic method is present, in a preferred embodiment, in the form of the protocol which will now be described in more detail as a complement to table 1, which makes it possible to diagnose the effectiveness of the pollution control system associated with the Diesel engine described in support of figure 1.

The protocol makes it possible to sweep the entire working range of the engine's operation by checking all steps of combustion with their related chemical transformation. It makes it possible in particular to very precisely diagnose the malfunctions of the engine or devices associated with the engine which are the causes of the malfunction of this engine's pollution control system.

Before launching the measurement and diagnostic method, the protocol asks the user to specify the type of Diesel engine on which the diagnostic is being performed (injection mode, turbocharger present or not...).

Preferably, the measurement is done every 500 ms.

The diagnostic device 20 according to the present invention, implementing the diagnostic method described, is present in the form of an independent apparatus able to be incorporated, in order to perform load measurements.

It should be noted in this respect that the gas levels are expressed, in the framework of the present invention, either in percentages, or in ppm (mg/l).

The dynamic diagnostic method according to the invention is implemented with the device according to the protocol which will now be described as a complement to table 1 below. It is preferably implemented on a hot Diesel engine.

### 1. First idle

During this phase, the level of unburnt hydrocarbons (HC) is measured. Indeed, a hydrocarbon (HC) level higher than 100 ppm at idle is the sign of a significant problem with the injection circuit corresponding to a seizing of the injectors. In this case, the protocol will not be able to continue and the diagnostic device will display the observed anomaly. It will then be necessary to check the injectors and the diesel oil circuit. The tube introduction test makes allow to determine whether the tube was indeed introduced into the exhaust line.

### 2. Cutting the engine

The duration of this phase is variable depending on the level of carbon dioxide (CO₂) : initially planned to last 50 seconds, it may extend itself 60 seconds longer if the value of this gas is too high to detect and analyze the increase of the carbon dioxide (CO₂) during starting-up of the engine, in the following step.

### 3. Starting up of the engine with maintenance at idle

During this phase, the proper operation of the EGR valve and of the pump and injectors is analyzed. What is check is the:
- operation of the control of the EGR valve (command in closed position) by the computer;
- operation of the EGR valve through the carbon dioxide (CO₂) value, the level of which must increase with its opening.
- operation of the EGR valve through the nitrogen oxide (NOx) value, the level of which must drop consecutively to its opening;
- level of gas recirculated through the carbon dioxide (CO₂) value;
- increase in pressure of the diesel oil circuit through the increase time of the carbon dioxide (CO₂) value (increased pressure of the pump);
- spraying of the injectors through the carbon monoxide (CO), hydrocarbon (HC) and nitrogen oxide (NOx) values;
- injection point through the carbon monoxide (CO) and nitrogen oxide (NOx) values;
- the compression of the engine (general condition of the mechanics) through the hydrocarbon (HC) and carbon monoxide (CO) values;
- air filling coefficient of the engine through the combination of the carbon dioxide (CO₂) and oxygen (O2) values. The carbon dioxide (CO₂) level, after starting up of the engine, must quickly reach 1.7% to 2.7%, which means that the quantity of diesel oil injected is correct. Then it must increase proportionally to the opening of the EGR valve without exceeding a value of 5.6%.

### 4. Engine at 12000 rpm

At this speed, there is balancing of the manifold pressure with the atmospheric pressure. This enables the detection of any air scoop on the intake circuit. To highlight this malfunction, one takes the nitrogen oxide (NOx) and carbon monoxide (CO) levels into account: the nitrogen oxide (NOx) value must drop significantly and the carbon monoxide (CO) value remains the same, relative to the idle speed.

### 5. Engine at an engine speed between 3000 and 3500 rpm

Over this range of speeds, the EGR valve must be closed. During this phase, what is check is the:
- closing of the EGR valve through the decrease of the carbon dioxide (CO₂) value;
- sealing of the EGR valve through the carbon dioxide (CO₂) level;
- sealing of the main turbocharger bearings through the hydrocarbon (HC) value;
- the closed EGR valve filling coefficient through the combination of the carbon dioxide (CO₂) and oxygen (O2) levels;
- the injection timing through the carbon monoxide (CO) and nitrogen oxide (NOx) values.

### 6. Fully loaded engine

This test is done with accelerator wide open at the maximum governing speed. During this phase, what is check is:
- internal leaks of the injectors through the carbon dioxide (CO₂) value;
- the flow regulator on common rail systems through the carbon dioxide (CO₂) level;
- operation of the turbocharger through the carbon dioxide (CO₂) value;
- insufficient filling of the engine with oxygen, for example due to clogging of the intake manifold, by taking the combination of oxygen (O₂) and carbon dioxide (CO₂) into account;
- the flow of the high-pressure pump through the carbon dioxide (CO₂) value;
- the spraying of the injectors through the nitrogen oxide (NOx) level.

### 7. Return to idle

This phase makes allows to confirm the proper or improper operation of the EGR valve as well as its control. One will also be able to check the sealing of the main bearings of the turbocharger.

### 8. Cutting the engine

During this phase, any clogging of the exhaust line will be highlighted through the carbon dioxide (CO₂) and oxygen (O₂) values (the O₂ level must quickly reach 20% and the carbon dioxide (CO₂) level must tend toward zero). In the event of clogging of the exhaust line, the exhaust gas recirculation level will be too high and will lead to a malfunction of the pollution control circuit.

**TABLE 1**

| Engine start-up | Idle | Engine cut | Start-up | Idle | Around 1200 rpm | Between 3000 and 3500 rpm | Fully loaded | Idle | Engine cut |
|---|---|---|---|---|---|---|---|---|---|
| | 30s | 50 or 110s | 40s | | 30s | 40s | 15s | 30s | 90s |
| | Injecto r seizing test | | | | | | | | |
| | | Test on CO₂ levels | | | | | | | |
| | Tube introduction test | | | | | | | | |
| | | | | | | | | | Exhaust line clogging |
| | | | | | | | Poor spraying of the injectors | | |
| | | | | | | | Internal leaks On injectors | | |
| | | | | | | EGR valve defective | | | |
| | | | | EGR valve poorly controlled or neutralized | | | | EGR valve poorly controlled or neutralized | |
| | | | | | | Leaks On Main Bearing of turbocharger | | Leaks On Main bearing of turbocharger | |
| | | | | | | | Turbocharger defective | | |
| | | | HP pump defective | | | | HP Pump defective | | |
| | | | | | | | Flow regulator defective | | |
| | | | | | | | Engine Filling problem | | |
| | | | | | Air scoop on intake circuit | | | | |
| | | | Flow problem | Flow problem | | | Flow problem | | |
| | | | | Lack of advance | | Lack of advance | | | |
| | | | | Too much advance | | Too Much advance | | | |

The test is thus described by a person at the controls of the vehicle who follows the instructions provided by the software during performance of the protocol.

The various malfunctions which may also be detected and characterized using the present invention are described in more detail below.

### 1. EGR valve not controlled or neutralized

As indicated above, the EGR valve enables the recirculation of part of the exhaust gases in the intake so as to limit the presence of nitrogen oxides (NOx). The checking method is based on the carbon dioxide (CO₂) value, which increase when the computer commands the opening of the EGR valve. The carbon dioxide (CO₂) value, EGR valve closed, at idle, is normally between 1.6% and 2.7%. By admitting, for example, that one recycles 100% of these values, then the carbon dioxide (CO₂) level should be within a range between 3.2% and 5.4%. If these values are between 1.6% and 2.7%, on both idle phases of the protocol, the EGR valve is not commanded by the computer, for example due to a defective air flowmeter, or neutralized (blocked in the closed position).

### 2. Defective or non-sealing EGR valve

The EGR valve is commanded by the computer over speed ranges taken into account by the protocol: toward 3000 rpm, in practice between 2700 rpm and 3000 rpm, the computer closes the EGR valve and therefore the recirculation of exhaust gases in the intake, which normally creates a drop of the carbon dioxide level. Moreover, if the EGR valve lacks sealing due to fouling, the carbon dioxide (CO₂) value will be equal to, or higher than, the levels measured during the idle and 1200 rpm phases (at idle, during opening of the EGR valve, the recirculated carbon dioxide (CO₂) value must not exceed the value of 5.8% and even, preferably, 5.6%). In this respect, significant clogging of the exhaust line may be at the origin of the fouling of the EGR valve.

### 3. Clogged exhaust line

The role of the exhaust line is crucial: the reduction of decibels of the engine and the evacuation of burned gases. On vehicles with pollution control, the exhaust line is equipped with an oxidation pipe or a particle filter. These elements must have a minimum of load loss to operate well. An engine problem, driving a discharge of unburnt gases and soot and particles in too large a quantity, will clog the exhaust line. Moreover, this will cause an excess of recirculated exhaust gas in the intake through the EGR, thereby increasing the initial malfunction and causing a higher quantity of polluting gases to be discharged. This has significant consequences for the operation of the engine and its pollution control system. In extreme cases, it may prevent the engine from starting up. It is during the last phase of the protocol, engine cut, that the exhaust line is checked. When the engine is stoped, the carbon dioxide (CO₂) values must quickly fall to a value below 1% and the oxygen O₂ value must, likewise, exceed 20%. If these levels are not reached at the end of 40 seconds, the exhaust line is considered to be clogged.

### 4. Filling problem

Filling is the physical capacity of the engine to admit air. In a Diesel engine, air compression enables the ignition of the diesel oil through the elevation of the temperature in the cylinder. A deficient quantity of air admitted into the engine causes the following malfunctions:
- too long an ignition delay with, as consequences, a formation of soot and particles;
- an increase in consumption with loss of power observed on the road;
- smoke at the exhaust during acceleration;
The possible causes of a filling problem are:
- clogging of the exhaust line;
- clogging of the intake conduit;
- a non-sealing EGR valve;
- a defective turbocharger solenoid valve;
- a defective turbocharger;
- incorrect clearance at the valves;
- wearing of the engine.
As the atmosphere is made up of approximately 20.9% oxygen (O₂) per air contents, and taking the combustion of the hydrocarbons (HC) into account upon combustion in the idle phase, the addition of oxygen (O₂) and carbon dioxide (CO₂) levels must be at least equal to 19% during the fully loaded phase. In the contrary case, the engine has insufficient filling.

### 5. Internal leak of the common rail injectors

The common rail injectors are generally of the electrohydraulic type. On the hydraulic level, they are equipped with two chambers (upper and lower) in which the balance or imbalance of pressure allow to maintain the needle of the injector either in the closed position, or in the open position. An internal circuit makes allow to connect these two chambers and ensure the return of diesel oil. When there is an internal leak on the injector return, the quantity of fuel (pressure decrease) and the moment of passage into the open position of the needle of the injector are modified. This causes a lack of performance (correction of the injection point and lack of flow). In the case of a significant loss, this malfunction may even prevent the engine from starting. Revealing internal leaks on the injectors is done:
- at 1200 and 3000 rpm through an increase in carbon monoxide (CO) relative to the idle phase; or
- fully loaded, by a carbon dioxide (CO₂) level dropped by 1 to 5% between the beginning and the end of the phase.
The two analyses may, of course, be done to complement one another.

### 6. Checking the flow regulator of the high-pressure (HP) pumps on the common rail systems

The common rail systems are equipped with a HP pump, the role of which is to generate pressure according to the load and speed. The quantity of diesel oil injected into the combustion chamber, per cycle, depends on this pressure. The flow regulator serves to inject the necessary and sufficient quantity of diesel oil, which results in greatly limiting the temperature of the fuel at the level of the return circuit in the tank. When the flow regulator is defective, the optimal quantity of diesel oil will not be injected into the cylinders, which will result in decreasing the engine's performance. Showing the malfunction of a flow regulator is done at full load, when the pump provides maximal pressure on its first two pistons. When the flow regulator is hydraulically defective, the maximal pressure is not immediately reached, and so the flow is not constant. This will be translated in carbon dioxide (CO₂) level, connected to the quantity of diesel oil injected and burned, showing an increase in its values between the beginning and the end of the full load phase. This increase of volume concentration (CO₂) must be higher than 8% to validate the malfunction.

### 7. Defective high pressure pump

The high pressure pump allow to generate a diesel oil pressure depending on the engine speed and the load (in practice up to 1800 bars; 1 bar = 10⁵ Pa). This pressure is variable according to the types of pump and the systems used. One visualizes the increase in pressure of the pump through the carbon dioxide (CO₂) slope upon start-up of the engine, but also at its maximal value at idle (EGR valve closed). The carbon dioxide (CO₂) increase phase until stabilized idle must not exceed 4 seconds and its value must exceed 1.6%, and even 1.7% in practice. During the fully loaded phase, the pump must deliver at full flow on its first two pistons. If this is defective, the carbon dioxide (CO₂) value will not exceed 2.5%. On distributor-type fuel injection pumps, although their operating principle is different, the values will be identical.

### 8. Poor spraying of the injectors

The quality of the spraying of the injectors is essential to ensure optimal combustion of all of the diesel oil injected into the combustion chamber. In the contrary case, the post combustion will extend and generate an increase in the temperature with significant formation of nitrogen oxides (NOx). There will also be unburned elements in the form of residual hydrocarbons (HC) and carbon monoxide (CO) ((HC) level higher than 10 ppm and CO value higher than 0.05%, regardless of the speed). During improper spraying of the injectors, the level of nitrogen oxides (NOx) will depend on the type of injection:
- direct injection: level higher than 120 ppm at idle (EGR valve open) and value higher than 300 ppm fully loaded;
- indirect injection: level higher than 120 pm at idle (EGR valve open) and value higher than 250 ppm fully loaded.

### 9. Leaks on turbocharger main bearings

The turbocharger allows to increase the air filling of the engine, and therefore its performance. This is a rotating machine which uses the pressure from the exhaust gases to suck up and compress the outside air admitted into the engine. The blade and the axis of the turbocharger can exceed a speed of rotation of 150,000 rpm. At this speed, any lubrication flaws will cause the destruction of the bearings and the turbocharger. Breaking of the bearings causes the oil to be sucked up again and the engine to race until it breaks. An oil leak on a turbocharger bearing is a worrisome sign of wear. Upon leaks on the turbocharger bearings:
- at the speed of 3000 rpm, the level of hydrocarbons HC will increase in relation to the values measured at idle and at 1200 rpm;
- similarly during the fully loaded phase, the level of hydrocarbons HC will be higher than the values measured at 3000 rpm;
- upon return to idle, the level of hydrocarbons HC exceeds the value of 40 ppm.

### 10. Defective turbocharger

When the turbocharger is defective, due to a seized blade or a cutting of the supercharging pressure, in particular, the filling coefficient will drop significantly. At full load, the addition of the oxygen (O₂) and carbon dioxide (CO₂) levels will then be less than 19% with a carbon dioxide (CO₂) value higher than 8% and an oxygen (O₂) level less than 10.5%.

### 11. Injection advance excess

A diesel oil injection done too early causes too quick an increase in pressure in the cylinder, characterized by engine rattles. On vehicles equipped with a distributor-type fuel injection pump, blocking is necessary, but on common rail systems, it is necessary to act on the origin of the malfunction because there is no manual blocking action. An advance excess is characterized by:
- direct injection values: At idle, EGR valve open, the carbon monoxide (CO) levels are below 0.005% with nitrogen oxide (NOₓ) values higher than 140 ppm.
- indirect injection values: At idle, EGR valve open, the carbon monoxide (CO) values are below 0.005% with nitrogen oxide (NOₓ) values higher than 90 ppm.

### 12. Lack of injection advance

A lack of advance is characterized by a performance deficiency due to a combustion still present during the descent of the piston. The diesel oil injected therefore cannot burn correctly because when the piston descends, the temperature drops. During a lack of advance, the remarkable values of the gas will be:
- direct injection values:
   - at idle, the carbon monoxide (CO) levels are higher than 0.02% with nitrogen oxide (NOₓ) values less than 90 ppm;
   - at a speed of approximately 3000 rpm, the carbon monoxide (CO) levels are higher than 0.02% with nitrogen oxide (NOx) values higher than 100 ppm.
- indirect injection values:
   - at idle, the carbon monoxide (CO) levels are higher than 0.02% with nitrogen oxide (NOₓ) values less than 60 ppm.
   - at a speed of approximately 3000 rpm, the carbon monoxide (CO) levels are higher than 0.02% with nitrogen oxide (NOₓ) values higher than 60 ppm.

### 13. Air scoop on the intake circuit

When the engine turns at approximately 1200 rpm, there is balancing of the manifold pressure with the atmospheric pressure. This allows to detect any air scoop on the intake circuit. To highlight this malfunction, the levels of nitrogen oxides (NOₓ) and carbon monoxide (CO) are taken into account. In practice, the nitrogen oxide (NOₓ) value should drop significantly and the carbon monoxide (CO) value should remain identical, in relation to the idle speed.

### 14. Flow problem

As indicated previously, the diesel oil flow is controlled by the values of CO₂ over the entire range of speeds. At idle, if the CO₂ value is less than 1.7% and this does not exceed 2.5% fully loaded, a problem on the diesel oil flow is then proven. The CO₂ value must be higher than 1% to continue the test.

The diagnostic method according to the present invention implements a dynamic monitoring of the combustion of the Diesel engine, in particular through the measurement of at least one of (i) the concentration of each of two different gases for a predetermined engine speed, (ii) the concentration of a same gas at two different moments of a stabilized engine speed or over each of two different ranges of engine speeds or for each of two different states of a device connected to the engine, in order to determine a state resulting from the sum of the volume concentrations of two different gases or of a variation of concentration of a same gas in order to establish the existence of a given malfunction in case of drift relative to a reference state.

According to this method, one analyzes at least the volume concentration in carbon dioxide, and, preferably, also at least one of the gases chosen from the group including carbon monoxide (CO), oxygen (O₂), nitrogen oxides (NOₓ) and unburnt hydrocarbons (HC) the five gases being very advantageously analyzed to establish a complete diagnostic.

Of course, the present invention is not limited to the embodiments described and illustrated.

In particular, the diagnostic device may, for example, take the form of an incorporated system.

## Claims

1. A diagnostic method for a Diesel engine for determining whether said engine, or at least one device connected to said engine, is affected by one or several malfunctions negatively impacting the degree of pollution of the exhaust gases produced by said engine, comprising the steps of:
- analyzing the level of a first exhaust gas, or the evolution of said exhaust gas level, according to a predetermined state of said engine, and
- deducing or characterizing, from said analysis, a malfunction affecting said engine and/or said device connected thereto,
wherein said first exhaust gas is carbon dioxide (CO2).

2. The method according to claim 1, wherein the level or evolution of the first exhaust gas is analyzed in combination with the level, or evolution of the level, of at least one other exhaust gas.

3. The method according to claim 2, wherein the at least one other exhaust gas is selected from the group consisting of carbon monoxide (CO), oxygen (O2), nitrogen oxides (NOx), and unburnt hydrocarbons (HC).

4. The method according to any of the claims 2 or 3, wherein, the level and the evolution of the level of the gases are analyzed depending on several predetermined states, and, from said analysis, the malfunctions, which may be affecting the engine and/or the device connected thereto, are deduced or **characterized**.

5. The method according to any one of the preceding claims, wherein, according to a predetermined operating state of the engine, the level of the first exhaust gas, alone or in combination with at least another exhaust gas, is measured and compared to a first level of said exhaust gas measured for a state representing a normal operation of said engine or the device connected thereto, and/or compared to a second level of said exhaust gas measured for a state representing an abnormal operation of said engine, or the device connected thereto, and characterizing a predetermined malfunction, and from said comparison, deducing that said engine, or said device connected thereto, is affected by said predetermined malfunction.

6. The method according to any one of the preceding claims, wherein the predetermined state of the engine is one of the following: idle, off after being idle, start-up, idle after being started-up, 1200 rpm, between around 3000 and around 3500 rpm, full load, idle after being full-loaded.

7. The method according to any one of the preceding claims, comprising the steps of:
- analyzing the evolution of the level of carbon dioxide according to an operating state of the engine causing the opening of an exhaust gas recirculation (EGR) valve connected to said engine, using a computer controlling the opening and closing of said valve, and
- deducing, from a lack of increase of the level of carbon dioxide after theoretical opening of the exhaust gas recirculation valve, that said valve is not controlled by the computer or blocked in the closed position, or the steps of:
- analyzing the evolution of the carbon dioxide level according to an operating state of said engine causing the closing of an exhaust gas recirculation valve connected to said engine using a computer controlling the opening and closing of this valve, and
- deducing, from a lack of decrease, for an engine speed between 3000 and 3500 rpm, of the carbon dioxide level after theoretical closing of the exhaust gas recycling valve, that said valve is blocked in the open position, or the steps of:
- analyzing the evolution of the carbon dioxide level, for an engine operation at a speed below 2700 rpm and at a speed between 3000 and 3500 rpm, and
- deducing from a carbon dioxide level for said 3000 and 3500 rpm speed equal to, or higher than, the value measured for a speed less than 2700 rpm, that said valve lacks sealing.

8. The method according to any one of the preceding claims, comprising the steps of:
- analyzing the carbon dioxide level and oxygen level, engine off after an idle operation, and
- deducing that the exhaust line connected to said engine is clogged, if, at the end of approximately 40 seconds, the carbon dioxide level has not dropped to a value below approximately 1% and the oxygen level is not higher than or equal to approximately 20%.

9. The method according to any one of the preceding claims, comprising the steps of:
- analyzing the carbon dioxide level and the oxygen level for a fully loaded engine operation, and
- deducing, from a total carbon dioxide and oxygen level less than approximately 19%, that the engine has insufficient air filling.

10. The method according to any one of the preceding claims, comprising the steps of:
- analyzing the carbon dioxide level for a fully loaded engine operation, and
- deducing, from a decrease in the carbon dioxide level during the fully loaded operation, that a common rail injector system connected to said engine is affected by an internal leak, or
- deducing, from a carbon dioxide level dropping by approximately 1% to approximately 5% between the beginning and the end of a fully loaded phase lasting approximately 15 seconds, that a common rail injector system connected to the said engine is affected by an internal leak, or the steps of:
- analyzing, the evolution of the carbon monoxide level for an idle operation of the engine and at a speed higher than, or equal to, 1200 rpm, and
- deducing, from an increase in the carbon monoxide level relative to the idle phase, that a common rail injector system connected to said engine has an internal leak.

11. The method according to any one of the preceding claims, comprising the steps of:
- analyzing the carbon dioxide level for a fully loaded operation of the engine, and
- deducing, from an increase of the carbon dioxide level during fully loaded operation, that the flow regulator connected to a high pressure pump of a common rail injection system equipping said engine is defective, or the steps of:
- analyzing either the evolution of the level of carbon dioxide, from ignition of the engine until a stabilized idle speed of said engine without exhaust gas recirculation, or the level of carbon dioxide for a fully loaded operation of said engine, and
- deducing, from an increase in the carbon dioxide level not exceeding approximately 4 seconds and not exceeding approximately 1.5%, that the high pressure pump of the fuel injection system equipping said engine is defective, or from an increase in the carbon dioxide level exceeding 2.5% that the distributor-type pump of said fuel injection system is defective.

12. The method according to any one of the preceding claims, comprising the steps of:
- analyzing the carbon dioxide level and the oxygen level for a fully loaded engine operation, and
- deducing, from a total level of carbon dioxide and oxygen less than approximately 19%, with a carbon dioxide level higher than approximately 8%, and an oxygen level lower than approximately 10%, that the turbocharger equipping said engine is defective, or the steps of:
- analyzing the evolution of the concentration of unburnt hydrocarbons for a speed increase or a return to idle thereof, and
- deducing, from an increase in the level of hydrocarbons for the increase in speed, and a concentration higher than approximately 40 ppm after returning to idle, that the turbocharger equipping said engine has an oil leak on at least one of its bearings.

13. The method according to any one of the preceding claims, comprising the steps of:
- analyzing the carbon monoxide level and the unburnt hydrocarbons level, and
- deducing, from a carbon monoxide level higher than approximately 0.05% and a hydrocarbon level higher than approximately 10 ppm, that a poor spraying of the injectors is affecting said engine, or the steps of :
- analyzing the level of nitrogen oxides, either for an idle operation of the engine with exhaust gas recirculation, or for a fully loaded operation, and
- deducing, for a direct injection Diesel engine, from a level of nitrogen oxides higher than approximately 120 ppm at idle operation, or higher than approximately 250 ppm at fully loaded operation, that a poor spraying of the injectors is affecting said engine.

14. The method according to any one of the preceding claims, comprising the steps of:
- analyzing, the level of carbon monoxide and the level of nitrogen oxides for an idle operation of the engine, or at a speed of approximately 3000 rpm, and
- deducing:
a) from a carbon monoxide level lower than 0.005% and a nitrogen oxide level higher than approximately 140 ppm for a direct injection engine operating at idle with exhaust gas recirculation, that said engine has an injection advance excess; or
b) from a carbon monoxide level lower than approximately 0.005% and a nitrogen oxide level higher than approximately 90 ppm for an indirect injection engine operating at idle, with exhaust gas recirculation, that said engine has an injection advance excess; or
c) from a carbon monoxide level higher than 0.02% and a nitrogen oxide level lower than 90 ppm for a direct injection engine operating idle, that said engine lacks injection advance; or
d) from a carbon monoxide level higher than 0.02% and a nitrogen oxide level higher than 100 ppm for a direct injection engine operating at a speed of approximately 3000 rpm, that said engine lacks injection advance; or
e) from a carbon monoxide level higher than 0.02% and a nitrogen oxygen level lower than 60 ppm for a direct injection engine operating at idle, that said engine lacks injection advance; or
f) from a carbon monoxide level higher than 0.02% and a nitrogen oxide level higher than 60 ppm for a direct injection engine operating at approximately 3000 rpm, that said engine lacks injection advance.

15. The method according to any one of the preceding claims, comprising the steps of:
- analyzing the evolution of the carbon monoxide level and the nitrogen oxygen levels over a speed increase of the engine, from idle to approximately 1200 rpm, and
- deducing, from a decrease in the level of nitrogen oxides without variation of the carbon monoxide level, that the intake circuit equipping said engine has an air scoop.

16. The method according to any one of the preceding claims, further comprising the steps of:
- analyzing the level of unburnt hydrocarbons (HC) for an engine operating at idle, and
- deducing from a level higher than 100 ppm that the engine's injection circuit is affected by a seizing of the injectors.

17. A device for diagnosing a Diesel engine to determine whether said engine, or at least one device connected thereto, is affected by at least one malfunction negatively influencing the degree of pollution of the exhaust gases produced by said engine, comprising means for measuring at least a first exhaust gas, wherein said first exhaust gas is carbon dioxide (CO2), means for analyzing the level of said first exhaust gas, or the evolution of said level, according to one or several predetermined states of said engine, and processing means capable to characterize, from said analysis, a malfunction affecting said engine and/or the devices connected thereto.

18. The device according to claim 17, wherein the analysis means comprises a multi-gas detector (21) capable of detecting carbon dioxide (CO2), carbon monoxide (CO), oxygen (O2), nitrogen oxides (NOx), and unburnt hydrocarbons (HC).

19. The device according to claim 18, wherein said multi-gas detector (21) is functionally connected to means (23) for interpreting the various measured values, said means (23) for interpreting the various measured values comprising signal processing electronics allowing a phasing of the measured values.

20. Computer program executable on the device according to any of the claims 17 to 19 containing instructions that, when executed, perform the method steps of the method of any one of the claims 1 to 16.

## Patentansprüche

1. Diagnoseverfahren für eine Dieselkraftmaschine zum Bestimmen, ob die Kraftmaschine oder wenigstens eine mit der Kraftmaschine verbundene Vorrichtung durch eine oder mehrere Fehlfunktionen beeinflusst ist, die auf den Grad der Verschmutzung der durch die Kraftmaschine erzeugten Abgases negative Auswirkungen haben, wobei das Diagnoseverfahren die folgenden Schritte umfasst:
- Analysieren des Pegels eines ersten Abgases oder der Entwicklung des Abgaspegels gemäß einem vorgegebenen Zustand der Kraftmaschine und
- Ableiten oder Charakterisieren aus der Analyse einer Fehlfunktion, die die Kraftmaschine und/oder die mit ihr verbundene Vorrichtung beeinflusst,
wobei das erste Abgas Kohlendioxid (CO2) ist.

2. Verfahren nach Anspruch 1, wobei der Pegel oder die Entwicklung des ersten Abgases kombiniert mit dem Pegel oder der Entwicklung des Pegels wenigstens eines weiteren Abgases analysiert wird.

3. Verfahren nach Anspruch 2, wobei das wenigstens eine andere Abgas aus der Gruppe ausgewählt ist, die Kohlenmonoxid (CO), Sauerstoff (02) Stickstoffoxide (NOx) und unverbrannte Kohlenwasserstoffe (HC) umfasst.

4. Verfahren nach einem der Ansprüche 2 oder 3, wobei der Pegel und die Entwicklung des Pegels der Gase in Abhängigkeit von mehreren vorgegebenen Zuständen analysiert werden und wobei aus der Analyse die Fehlfunktionen, die die Kraftmaschine und/oder die mit ihr verbundene Vorrichtung beeinflussen können, abgeleitet oder charakterisiert werden.

5. Verfahren nach einem der vorhergehenden Ansprüche, wobei gemäß einem vorgegebenen Betriebszustand der Kraftmaschine der Pegel des ersten Abgases allein oder in Kombination mit wenigstens einem weiteren Abgas gemessen und mit einem ersten Pegel des Abgases, der für einen Zustand gemessen worden ist, der einen Normalbetrieb der Kraftmaschine oder der mit ihr verbundenen Vorrichtung repräsentiert, verglichen wird und/oder mit einem zweiten Pegel des Abgases, der für einen Zustand gemessen worden ist, der einen anormalen Betrieb der Kraftmaschine oder der mit ihr verbundenen Vorrichtung repräsentiert und eine vorgegebene Fehlfunktion charakterisiert, verglichen wird, wobei aus dem Vergleich abgeleitet wird, dass die Kraftmaschine oder die mit ihr verbundene Vorrichtung durch die vorgegebene Fehlfunktion beeinflusst ist.

6. Verfahren nach einem der vorhergehenden Ansprüche, wobei der vorgegebene Zustand der Kraftmaschine einer der folgenden ist: Leerlauf, ausgeschaltet nach dem Leerlauf, Starten, Leerlauf nach dem Starten, 1200 U/min, zwischen etwa 3000 und etwa 3500 U/min, Volllast, Leerlauf nach Volllast.

7. Verfahren nach einem der vorhergehenden Ansprüche, das die folgenden Schritte umfasst:
- Analysieren der Entwicklung des Pegels des Kohlendioxids gemäß einem Betriebszustand der Kraftmaschine, der das Öffnen eines Abgasrückführungsventils (AGR-Ventils), das mit der Kraftmaschine verbunden ist, unter Verwendung eines Computers, der das Öffnen und das Schließen des Ventils steuert, verursacht, und
- Ableiten aus einem Fehlen einer Zunahme des Pegels des Kohlendioxids nach dem theoretischen Öffnen des Abgasrückführungsventils, dass das Ventil nicht durch den Computer gesteuert wird oder in der geschlossenen Position blockiert ist, oder das die folgenden Schritte umfasst:
- Analysieren der Entwicklung des Kohlendioxidpegels gemäß einem Betriebszustand der Kraftmaschine, der das Schließen des Abgasrückführungsventils, das mit der Kraftmaschine verbunden ist, unter Verwendung eines Computers, der das Öffnen und das Schließen dieses Ventils steuert, verursacht, und
- Ableiten aus dem Fehlen einer Abnahme des Kohlendioxidpegels für eine Kraftmaschinendrehzahl zwischen 3000 und 3500 U/min nach dem theoretischen Schließen des Abgasrückführungsventils, dass das Ventil in der offenen Position blockiert ist, oder das die folgenden Schritte umfasst:
- Analysieren der Entwicklung des Kohlendioxidpegels für einen Kraftmaschinenbetrieb bei einer Drehzahl unter 2700 U/min und bei einer Drehzahl zwischen 3000 und 3500 U/min und
- Ableiten von einem Kohlendioxidpegel für die Drehzahl von 3000 und 3500 U/min, der gleich dem oder höher als der Wert ist, der für eine Drehzahl, die kleiner als 2700 U/min, gemessen wird, dass dem Ventil die Dichtung fehlt.

8. Verfahren nach einem der vorhergehenden Ansprüche, das die folgenden Schritte umfasst:
- Analysieren des Kohlendioxidpegels und des Sauerstoffpegels bei ausgeschalteter Kraftmaschine nach einem Leerlaufbetrieb und
- Ableiten, dass die mit der Kraftmaschine verbundener Abgasleitung verstopft ist, falls am Ende von etwa 40 Sekunden der Kohlendioxidpegel nicht auf einen Wert unter etwa 1 % gefallen ist und der Sauerstoffpegel nicht höher als oder gleich etwa 20 % ist.

9. Verfahren nach einem der vorhergehenden Ansprüche, das die folgenden Schritte umfasst:
- Analysieren des Kohlendioxidpegels und des Sauerstoffpegels für einen Volllast-Kraftmaschinenbetrieb und
- Ableiten von einem Gesamt-Kohlendioxid- und -sauerstoffpegel, der kleiner als etwa 19 % ist, dass die Kraftmaschine eine unzureichende Luftfüllung besitzt.

10. Verfahren nach einem der vorhergehenden Ansprüche, das die folgenden Schritte umfasst:
- Analysieren des Kohlendioxidpegels für einen Volllast-Kraftmaschinenbetrieb und
- Ableiten von einer Abnahme des Kohlendioxidpegels während des Volllastbetriebs, dass ein Common-Rail-Injektor-System, das mit der Kraftmaschine verbunden ist, durch eine innere Undichtigkeit beeinflusst ist, oder
- Ableiten von einem Kohlendioxidpegel, der um etwa 1 % auf etwa 5 % zwischen dem Beginn und dem Ende einer Volllastphase, die etwa 15 Sekunden dauert, fällt, dass ein Common-Rail-Injektor-System, das mit der Kraftmaschine verbunden ist, durch eine innere Undichtigkeit beeinflusst ist, oder das die folgenden Schritte umfasst:
- Analysieren der Entwicklung des Kohlenmonoxidpegels für einen Leerlaufbetrieb der Kraftmaschine und bei einer Drehzahl, die höher als oder gleich 1200 U/min ist, und
- Ableiten von einer Zunahme des Kohlenmonoxidpegels bezüglich der Leerlaufphase, dass ein Common-Rail-Injektor-System, das mit der Kraftmaschine verbunden ist, eine innere Undichtigkeit besitzt.

11. Verfahren nach einem der vorhergehenden Ansprüche, das die folgenden Schritte umfasst:
- Analysieren des Kohlendioxidpegels für einen Volllastbetrieb der Kraftmaschine und
- Ableiten von einer Zunahme des Kohlendioxidpegels während des Volllastbetriebs, dass ein Durchflussmengenregler, der mit einer Hochdruckpumpe eines Common-Rail-Injektor-Systems, mit dem die Kraftmaschine ausgerüstet ist, verbunden ist, defekt ist, oder das die folgenden Schritte umfasst:
- Analysieren entweder der Entwicklung des Pegels des Kohlendioxids von der Zündung der Kraftmaschine bis zu einer stabilisierten Leerlaufdrehzahl der Kraftmaschine ohne Abgasrückführung oder des Pegels des Kohlendioxids für einen Volllastbetrieb der Kraftmaschine und
- Ableiten von einer Zunahme des Kohlendioxidpegels, die etwa 4 Sekunden nicht übersteigt und etwa 1,5 % nicht übersteigt, dass die Hochdruckpumpe des Kraftstoffeinspritzsystems, mit dem die Kraftmaschine ausgerüstet ist, defekt ist, oder von einer Zunahme des Kohlendioxidpegels, der 2,5 % übersteigt, dass die Pumpe der Verteilerbauart des Kraftstoffeinspritzsystems defekt ist.

12. Verfahren nach einem der vorhergehenden Ansprüche, das die folgenden Schritte umfasst:
- Analysieren des Kohlendioxidpegels und des Sauerstoffpegels für einen Volllast-Kraftmaschinenbetrieb und
- Ableiten von einem Gesamtpegel des Kohlendioxids und des Sauerstoffs, der kleiner als etwa 19 % ist, wobei ein Kohlendioxidpegel höher als etwa 8 % ist und ein Sauerstoffpegel niedriger als etwa 10 % ist, dass der Turbolader, mit dem die Kraftmaschine ausgerüstet ist, defekt ist, oder das die folgenden Schritte umfasst:
- Analysieren der Entwicklung der Konzentration der unverbrannten Kohlenwasserstoffe für eine Drehzahlzunahme oder deren Rückkehr zum Leerlauf und
- Ableiten von einer Zunahme des Pegels der Kohlenwasserstoffe für die Zunahme der Drehzahl und einer Konzentration, die nach dem Zurückkehren zum Leerlauf höher als etwa 40 ppm ist, dass der Turbolader, mit dem die Kraftmaschine ausgerüstet ist, in wenigstens einem seiner Lager eine Ölundichtigkeit besitzt.

13. Verfahren nach einem der vorhergehenden Ansprüche, das die folgenden Schritte umfasst:
- Analysieren des Kohlenmonoxidpegels und des Pegels der unverbrannten Kohlenwasserstoffe und
- Ableiten von einem Kohlenmonoxidpegel, der höher als etwa 0,05 % ist, und einem Kohlenwasserstoffpegel, der höher als etwa 10 ppm ist, dass ein schlechtes Sprühen der Einspritzdüsen die Kraftmaschine beeinflusst, oder das die folgenden Schritte umfasst:
- Analysieren des Pegels der Stickstoffoxide entweder für einen Leerlaufbetrieb der Kraftmaschine mit Abgasrückführung oder für einen Volllastbetrieb und
- Ableiten für eine Dieselkraftmaschine mit Direkteinspritzung von einem Pegel der Stickstoffoxide, der im Leerlaufbetrieb der höher als etwa 120 ppm ist oder der im Volllastbetrieb höher als etwa 250 ppm ist, dass ein schlechtes Sprühen der Einspritzdüsen die Kraftmaschine beeinflusst.

14. Verfahren nach einem der vorhergehenden Ansprüche, das die folgenden Schritte umfasst:
- Analysieren des Pegels des Kohlenmonoxids und des Pegels der Stickstoffoxide für einen Leerlaufbetrieb der Kraftmaschine oder bei einer Drehzahl von etwa 3000 U/min und
- Ableiten:
a) von einem Kohlenmonoxidpegel, der niedriger als 0,005 % ist, und einem Stickstoffoxidpegel, der höher als etwa 140 ppm ist, für eine Kraftmaschine mit Direkteinspritzung, die im Leerlauf mit Abgasrückführung arbeitet, dass die Kraftmaschine einen Einspritzverstellüberschuss besitzt; oder
b) von einem Kohlenmonoxidpegel, der niedriger als etwa 0,005 % ist, und einem Stickstoffoxidpegel, der höher als etwa 90 ppm ist, für eine Kraftmaschine mit indirekter Einspritzung, die im Leerlauf mit Abgasrückführung arbeitet, dass die Kraftmaschine einen Einspritzverstellüberschuss besitzt; oder
c) von einem Kohlenmonoxidpegel, der höher als 0,02 % ist, und einem Stickstoffdioxidpegel, der niedriger als 90 ppm ist, für eine Kraftmaschine mit Direkteinspritzung, die im Leerlauf arbeitet, dass der Kraftmaschine eine Einspritzverstellung fehlt; oder
d) von einem Kohlenmonoxidpegel, der höher als 0,02 % ist, und einem Stickstoffdioxidpegel, der höher als 100 ppm ist, für eine Kraftmaschine mit Direkteinspritzung, die bei einer Drehzahl von etwa 3000 U/min arbeitet, dass der Kraftmaschine eine Einspritzverstellung fehlt; oder
e) von einem Kohlenmonoxidpegel, der höher als 0,02 % ist, und einem Stickstoffoxidpegel, der niedriger als 60 ppm ist, für eine Kraftmaschine mit Direkteinspritzung, die im Leerlauf arbeitet, dass der Kraftmaschine eine Einspritzverstellung fehlt; oder
f) von einem Kohlenmonoxidpegel, der höher als 0,02 % ist, und einem Stickstoffoxidpegel, der höher als 60 ppm ist, für eine Kraftmaschine mit Direkteinspritzung, die bei etwa 3000 U/min arbeitet, dass der Kraftmaschine eine Einspritzverstellung fehlt.

15. Verfahren nach einem der vorhergehenden Ansprüche, das die folgenden Schritte umfasst:
- Analysieren der Entwicklung des Kohlenmonoxidpegels und der Stickstoffoxidpegel während einer Drehzahlzunahme der Kraftmaschine vom Leerlauf zu etwa 1200 U/min und
- Ableiten von einer Abnahme des Pegels der Stickstoffoxide ohne Variation des Kohlenmonoxidpegels, dass der Einlasskreis, mit dem die Kraftmaschine ausgerüstet ist, eine Lufthutze besitzt.

16. Verfahren nach einem der vorhergehenden Ansprüche, das ferner die folgenden Schritte umfasst:
- Analysieren des Pegels der unverbrannten Kohlenwasserstoffe (HC) für eine im Leerlauf arbeitende Kraftmaschine und
- Ableiten von einem Pegel, der höher als 100 ppm ist, dass der Einspritzkreis durch ein Blockieren der Einspritzdüsen beeinflusst ist.

17. Vorrichtung zum Diagnostizieren einer Dieselkraftmaschine, um zu bestimmen, ob die Kraftmaschine oder wenigstens eine mit ihr verbundene Vorrichtung durch wenigstens eine Fehlfunktion beeinflusst ist, die auf den Grad der Verschmutzung der durch die Kraftmaschine erzeugten Abgases negative Auswirkungen hat, die Mittel zum Messen wenigstens eines ersten Abgases, wobei das erste Abgas Kohlendioxid (CO2) ist, Mittel zum Analysieren des Pegels dieses ersten Abgases oder der Entwicklung dieses Pegels gemäß einem oder mehreren vorgegebenen Zuständen der Kraftmaschine und Verarbeitungsmittel, die aus der Analyse eine Fehlfunktion, die die Kraftmaschine und/oder die mit ihr verbundene Vorrichtungen beeinflusst, charakterisieren können, umfasst.

18. Vorrichtung nach Anspruch 17, wobei die Analysemittel einen Mehrfachgasdetektor (21) umfassen, der Kohlendioxid (CO2), Kohlenmonoxid (CO), Sauerstoff (O2) Stickstoffoxide (NOx) und unverbrannte Kohlenwasserstoffe (HC) detektieren kann.

19. Vorrichtung nach Anspruch 18, wobei der Mehrfachgasdetektor (21) funktionstechnisch mit Mitteln (23) zum Interpretieren der verschiedenen gemessenen Werte verbunden ist, wobei die Mittel (23) zum Interpretieren der verschiedenen gemessenen Werte eine Signalverarbeitungselektronik umfassen, die ein Synchronisieren der gemessenen Werte ermöglicht.

20. Computerprogramm, das in der Vorrichtung nach einem der Ansprüche 17 bis 19 ausführbar ist und das Anweisungen enthält, die, wenn sie ausgeführt werden, die Verfahrensschritte des Verfahrens nach einem der Ansprüche 1 bis 16 ausführen.

## Revendications

1. Procédé de diagnostic d'un moteur diesel pour déterminer si ledit moteur, ou au moins un dispositif connecté audit moteur, est affecté par un ou plusieurs dysfonctionnement(s) qui a (ont) un impact négatif sur le degré de pollution des gaz d'échappement produits par ledit moteur, comprenant les étapes suivantes:
- analyser le niveau d'un premier gaz d'échappement, ou l'évolution dudit niveau de gaz d'échappement, selon un état prédéterminé dudit moteur, et
- déduire ou caractériser, à partir de ladite analyse, un dysfonctionnement qui affecte ledit moteur et/ou ledit dispositif connecté à celui-ci,
dans lequel ledit premier gaz d'échappement est le dioxyde de carbone (CO₂).

2. Procédé selon la revendication 1, dans lequel le niveau ou l'évolution du premier gaz d'échappement est analysé(e) en combinaison avec le niveau, ou l'évolution du niveau, d'au moins un autre gaz d'échappement.

3. Procédé selon la revendication 2, dans lequel ledit au moins un autre gaz d'échappement est sélectionné dans le groupe comprenant le monoxyde de carbone (CO), l'oxygène (O₂), les oxydes d'azote (NOₓ) et les hydrocarbures non brûlés (HC).

4. Procédé selon l'une quelconque des revendications 2 ou 3, dans lequel le niveau et l'évolution du niveau des gaz sont analysés en fonction de plusieurs états prédéterminés et, à partir de ladite analyse, les dysfonctionnements, qui peuvent affecter le moteur et/ou le dispositif connecté à celui-ci, sont déduits ou **caractérisés**.

5. Procédé selon l'une quelconque des revendications précédentes, dans lequel, selon un état de fonctionnement prédéterminé du moteur, le niveau du premier gaz d'échappement, seul ou en combinaison avec au moins un autre gaz d'échappement, est mesuré et comparé à un premier niveau dudit gaz d'échappement mesuré pour un état qui représente un fonctionnement normal dudit moteur ou du dispositif connecté à celui-ci, et/ou comparé à un deuxième niveau dudit gaz d'échappement mesuré pour un état qui représente un fonctionnement anormal dudit moteur, ou du dispositif connecté à celui-ci, et caractérise un dysfonctionnement prédéterminé, et à partir de ladite comparaison, déduire que ledit moteur, ou ledit dispositif connecté à celui-ci, est affecté par ledit dysfonctionnement prédéterminé.

6. Procédé selon l'une quelconque des revendications précédentes, dans lequel l'état prédéterminé du moteur est un des suivants: ralenti, à l'arrêt après un ralenti, démarrage, au ralenti après un démarrage, à 1200 tpm, entre environ 3000 tpm et 3500 tpm, à pleine charge, au ralenti après pleine charge.

7. Procédé selon l'une quelconque des revendications précédentes, comprenant les étapes suivantes:
- analyser l'évolution du niveau de dioxyde de carbone selon un état de fonctionnement du moteur qui entraîne l'ouverture d'une soupape de recirculation de gaz d'échappement (RGE) qui est connectée audit moteur, en utilisant un ordinateur qui commande l'ouverture et la fermeture de ladite soupape, et
- déduire, à partir d'une absence d'augmentation du niveau de dioxyde de carbone après une ouverture théorique de la soupape de recirculation de gaz d'échappement, que ladite soupape n'est pas commandée par l'ordinateur ou est bloquée dans la position fermée, ou les étapes suivantes:
- analyser l'évolution du niveau de dioxyde de carbone selon un état de fonctionnement dudit moteur qui entraîne la fermeture d'une soupape de recirculation de gaz d'échappement qui est connectée audit moteur en utilisant un ordinateur qui commande l'ouverture et la fermeture de ladite soupape, et
- déduire, à partir de l'absence de diminution, pour une vitesse de moteur comprise entre 3000 tpm et 3500 tpm, du niveau de dioxyde de carbone après une fermeture théorique de la soupape de recirculation de gaz d'échappement, que la soupape est bloquée dans la position ouverte, ou les étapes suivantes:
- analyser l'évolution du niveau de dioxyde de carbone, pour un fonctionnement du moteur à une vitesse inférieure à 2700 tpm et à une vitesse comprise entre 3000 tpm et 3500 tpm, et
- déduire à partir d'un niveau de dioxyde de carbone, pour lesdites vitesses de 3000 tpm et 3500 tpm, égal ou supérieur à la valeur mesurée pour une vitesse inférieure à 2700 tpm, que ladite soupape présente un déficit d'étanchéité.

8. Procédé selon l'une quelconque des revendications précédentes, comprenant les étapes suivantes:
- analyser le niveau de dioxyde de carbone et le niveau d'oxygène, moteur à l'arrêt après un fonctionnement au ralenti, et
- déduire que la ligne d'échappement qui est connectée audit moteur est bouchée si, au terme d'approximativement 40 secondes, le niveau de dioxyde de carbone n'a pas chuté à une valeur qui est inférieure à approximativement 1 % et que le niveau d'oxygène n'est pas supérieur ou égal à approximativement 20 %.

9. Procédé selon l'une quelconque des revendications précédentes, comprenant les étapes suivantes:
- analyser le niveau de dioxyde de carbone et le niveau d'oxygène pour un fonctionnement de moteur à pleine charge, et
- déduire, à partir d'un niveau total de dioxyde de carbone et d'oxygène qui est inférieur à approximativement 19 %, que le moteur souffre d'une arrivée d'air insuffisante.

10. Procédé selon l'une quelconque des revendications précédentes, comprenant les étapes suivantes:
- analyser le niveau de dioxyde de carbone pour un fonctionnement du moteur à pleine charge, et
- déduire, à partir d'une diminution du niveau de dioxyde de carbone pendant le fonctionnement à pleine charge, qu'un système d'injecteur à rampe commune qui est connecté audit moteur est affecté par une fuite interne,
- déduire, à partir d'un niveau de dioxyde de carbone qui chute d'approximativement 1 % à approximativement 5 % entre le début et la fin d'une phase de pleine charge qui dure approximativement 15 secondes, qu'un système d'injecteur à rampe commune qui est connecté audit moteur est affecté par une fuite interne, ou les étapes suivantes:
- analyser l'évolution du niveau de monoxyde de carbone pour un fonctionnement au ralenti du moteur et à une vitesse supérieure ou égale à 1200 tpm, ou
- déduire, à partir d'une augmentation du niveau de monoxyde de carbone par rapport à la phase de ralenti, qu'un système d'injecteur à rampe commune qui est connecté audit moteur présente une fuite interne.

11. Procédé selon l'une quelconque des revendications précédentes, comprenant les étapes suivantes:
- analyser le niveau de dioxyde de carbone pour un fonctionnement à pleine charge du moteur, et
- déduire, à partir d'une augmentation du niveau de dioxyde de carbone pendant un fonctionnement à pleine charge, que le régulateur de débit qui est connecté à une pompe haute pression d'un système d'injecteur à rampe commune qui équipe ledit moteur est défectueux, ou les étapes suivantes:
- analyser soit l'évolution du niveau de dioxyde de carbone, depuis l'allumage du moteur jusqu'à une vitesse de ralenti stabilisée dudit moteur sans recirculation de gaz d'échappement, ou le niveau de dioxyde de carbone pour un fonctionnement à pleine charge dudit moteur, et
- déduire, à partir d'une augmentation du niveau de dioxyde de carbone qui ne dépasse pas approximativement 4 secondes et qui ne dépasse pas approximativement 1,5 %, que la pompe haute pression du système d'injection de carburant qui équipe ledit moteur est défectueuse, ou à partir d'une augmentation du niveau de dioxyde de carbone qui dépasse 2,5 %, que la pompe de type distributeur dudit système d'injection de carburant est défectueuse.

12. Procédé selon l'une quelconque des revendications précédentes, comprenant les étapes suivantes:
- analyser le niveau de dioxyde de carbone et le niveau d'oxygène pour un fonctionnement du moteur à pleine charge, et
- déduire, à partir d'un niveau total de dioxyde de carbone et d'oxygène inférieur à approximativement 19 %, avec un niveau de dioxyde de carbone supérieur à approximativement 8 %, et un niveau d'oxygène inférieur à approximativement 10 %, que le turbocompresseur qui équipe ledit moteur est défectueux, ou les étapes suivantes:
- analyser l'évolution de la concentration d'hydrocarbures non brûlés pour une augmentation de la vitesse ou un retour au ralenti de celle-ci, et
- déduire, à partir d'une augmentation du niveau des hydrocarbures pour l'augmentation de la vitesse, et d'une concentration supérieure à approximativement 40 ppm après le retour au ralenti, que le turbocompresseur qui équipe ledit moteur présente une fuite d'huile sur au moins un de ses paliers.

13. Procédé selon l'une quelconque des revendications précédentes, comprenant les étapes suivantes:
- analyser le niveau de monoxyde de carbone et le niveau des hydrocarbures non brûlés, et
- déduire, à partir d'un niveau de monoxyde de carbone qui est supérieur à approximativement 0,05 % et un niveau des hydrocarbures qui est supérieur à approximativement 10 ppm, qu'une pulvérisation médiocre des injecteurs affecte le moteur, ou les étapes suivantes:
- analyser le niveau des oxydes d'azote, soit pour un fonctionnement au ralenti du moteur avec une recirculation des gaz d'échappement, soit pour un fonctionnement à pleine charge, et
- déduire, pour un moteur diesel à injection directe, à partir d'un niveau des oxydes d'azote qui est supérieur à approximativement 120 ppm lors d'un fonctionnement au ralenti, ou qui est supérieur à approximativement 250 ppm lors d'un fonctionnement à pleine charge, qu'une pulvérisation médiocre des injecteurs affecte ledit moteur.

14. Procédé selon l'une quelconque des revendications précédentes, comprenant les étapes suivantes:
- analyser le niveau de monoxyde de carbone et le niveau des oxydes d'azote pour un fonctionnement au ralenti du moteur, ou à une vitesse d'approximativement 3000 tpm, et
- déduire:
a) à partir d'un niveau de monoxyde de carbone qui est inférieur à 0,005 % et d'un niveau des oxydes d'azote qui est supérieur à approximativement 140 ppm pour un moteur à injection directe tournant au ralenti avec une recirculation des gaz d'échappement, que ledit moteur présente une d'avance à l'injection excessive; ou
b) à partir d'un niveau de monoxyde de carbone qui est inférieur à approximativement 0,005 % et d'un niveau des oxydes d'azote qui est supérieur à approximativement 90 ppm pour un moteur à injection indirecte qui fonctionne au ralenti, avec une recirculation des gaz d'échappement, que ledit moteur présente une avance à l'injection excessive; ou
c) à partir d'un niveau de monoxyde de carbone qui est supérieur à 0,02 % et d'un niveau des oxydes d'azote qui est inférieur à 90 ppm pour un moteur à injection directe tournant au ralenti, que ledit moteur souffre d'un déficit d'avance à l'injection; ou
d) à partir d'un niveau de monoxyde de carbone qui est supérieur à 0,02 % et d'un niveau des oxydes d'azote qui est supérieur à 100 ppm pour un moteur à injection directe tournant à une vitesse d'approximativement 3000 tpm, que ledit moteur souffre d'un déficit d'avance à l'injection; ou
e) à partir d'un niveau de monoxyde de carbone qui est supérieur à 0,02 % et d'un niveau des oxydes d'azote qui est inférieur à 60 ppm pour un moteur à injection directe tournant au ralenti, que ledit moteur souffre d'un déficit d'avance à l'injection; ou
f) à partir d'un niveau de monoxyde de carbone qui est supérieur à 0,02 % et d'un niveau des oxydes d'azote qui est supérieur à 60 ppm pour un moteur à injection directe tournant à une vitesse d'approximativement 3000 tpm, que ledit moteur souffre d'un déficit d'avance à l'injection.

15. Procédé selon l'une quelconque des revendications précédentes, comprenant les étapes suivantes:
- analyser l'évolution du niveau de monoxyde de carbone et des niveaux des oxydes d'azote lors d'une augmentation de la vitesse du moteur, du ralenti à approximativement 1200 tpm, et
- déduire, à partir d'une diminution du niveau des oxydes d'azote sans variation du niveau de monoxyde de carbone, que le circuit d'admission qui équipe ledit moteur présente une prise d'air.

16. Procédé selon l'une quelconque des revendications précédentes, comprenant en outre les étapes suivantes:
- analyser le niveau des hydrocarbures non brûlés (HC) pour un moteur tournant au ralenti, et
- déduire, à partir d'un niveau qui est supérieur à 100 ppm, que le circuit d'injection du moteur est affecté par un grippage des injecteurs.

17. Dispositif de diagnostic d'un moteur diesel permettant de déterminer si ledit moteur, ou au moins un dispositif qui est connecté à celui-ci, est affecté par au moins un dysfonctionnement qui influence de façon négative le degré de pollution des gaz d'échappement produits par ledit moteur, comprenant des moyens pour mesurer au moins un premier gaz d'échappement, dans lequel ledit premier gaz d'échappement est le dioxyde de carbone (CO₂) , des moyens pour analyser le niveau dudit premier gaz d'échappement, ou l'évolution dudit niveau, selon un ou plusieurs état(s) prédéterminé(s) dudit moteur, et des moyens de traitement qui sont capables de caractériser, à partir de ladite analyse, un dysfonctionnement qui affecte ledit moteur et/ou les dispositifs connectés à celui-ci.

18. Dispositif selon la revendication 17, dans lequel les moyens d'analyse comprennent un détecteur multi-gaz (21) qui est capable de détecter le dioxyde de carbone (CO₂) , le monoxyde de carbone (CO), l'oxygène (O₂) , les oxydes d'azote (NOₓ) et les hydrocarbures non brûlés (HC).

19. Dispositif selon la revendication 18, dans lequel ledit détecteur multi-gaz (21) est connecté de façon fonctionnelle à des moyens (23) pour interpréter les différentes valeurs mesurées, lesdits moyens (23) pour interpréter les différentes valeurs mesurées comprenant des composants électroniques de traitement de signal qui permettent de réaliser une mise en phase des valeurs mesurées.

20. Programme d'ordinateur exécutable sur le dispositif selon l'une quelconque des revendications 17 à 19 contenant des instructions qui, lorsqu'elles sont exécutées, exécutent les étapes de procédé du procédé selon l'une quelconque des revendications 1 à 16.
